# EUROPÄISCHE PATENTANMELDUNG

(11) **EP 0 768 247 A1**
(43) Veröffentlichungstag der Anmeldung: **16.04.1997**
(21) Anmeldenummer: 96115785.6
(22) Anmeldetag: 02.10.1996
(51) Int. Cl.: B65D 71/06, B65D 71/50

(54) **Sammelpackung, Folie als Sammelelement, und Verwendung der Folie zur Erstellung der Sammelpackung**

(30) Priorität: 12.10.1995 CH 2888/95
(71) Anmelder: Ribbon-Pac Engineering GmbH, 3007 Bern (CH)
(72) Erfinder: Saam, Bernhard, 3007 Bern (CH)
(74) Vertreter: Hotz, Klaus, Dipl.-El.-Ing./ETH Patentanwalt

(57) **Zusammenfassung**

**Sammelpackung.** Sie besteht aus Einzelpackstücken **(21)**, die einen Stapel **(22)** bilden, sowie aus einem Sammelelement **(24)**, der mit einer klebenden Schicht am Stapel anliegt. Das Sammelelement **(24)** kann vom Stapel **(22)** entfernt werden kann, ohne die Einzelpackstücke **(11)** zu beschädigen. In der Sammelpackung **(20)** berührt das Sammelelement **(24)** mindestens jedes Einzelpackstück **(11)**, das an der Stapelaussenseite liegt.
**Folie als Sammelelement.** Kunststoffolien, deren eine Seite eine klebende Schicht aufweist, sind geeignete Sammelelmente.
**Verwendung der Folie zur Erstellung der Sammelpackung.** Zur Verwendung der Folie als Sammelelement wird ein Abschnitt aus Folienmaterial abgetrennt und mit seiner klebenden Seite an den Stapel gelegt.

## Beschreibung

Die Erfindung betrifft eine Sammelpackung nach dem Oberbegriff des Patentanspruchs 1, eine Folie als Sammelelement der Sammelpackung nach dem Oberbegriff des Patentanspruchs 17 sowie eine Verwendung der Folie zum Erstellen der Sammelpackung nach dem Oberbegriff des Patentanspruchs 22.

Eine Vielzahl industriell hergestellter Produkte werden dem Endverbraucher als Einzelpackstücke angeboten, worunter einerseits die angebotenen Waren selbst, anderseits aber auch in Einzelpackungen abgepackte kleine Waren zu verstehen sind. Mehrere solcher Einzelpackstücke werden jeweils zu Sammelpackungen vereinigt, die typischerweise zum Erwerb durch Einzelhändler bestimmt sind, welche die Einzelpackstücke verkaufen. Mehrere Sammelpackungen werden in Grosspackungen zusammengeführt und so zum Grosshändler gebracht, der seinerseits die Einzelhändler beliefert.

Falls die für den Endverbraucher bestimmten Waren in Einzelpackungen abgefüllt werden, haben die dabei verwendeten Gebinde den Zweck, die Waren während der verschiedenen Transporte vor äusseren Einflüssen zu schützen; ausserdem sollten solche Einzelpackungen möglichst so gestaltet sein, dass sie eine geordnete Aufbewahrung erleichtern und die wiederholte Entnahme von Teilen ihres Inhalts ermöglichen. In ähnlicher Weise haben die Sammelpackungen den Zweck, den Transport der Einzelpackstücke zu erleichtern, diese dabei zu schützen, ihre geordnete Aufbewahrung zu erleichtern und die Entnahme von Einzelpackstücken zu ermöglichen. Entsprechendes gilt auch für die Grosspackungen. Insgesamt entsteht durch alle diese Packungen eine beträchtliche Menge an Abfall, was sowohl aus ökologischen wie auch aus ökonomischen Gründen unerwünscht ist.

Häufig verwendete Gebinde zur Erstellung von Einzelpackungen sind Schachteln, insbesondere aus Karton oder Kunststoff, ferner Dosen und Glasbehälter. Zwar liessen sich viele Güter auch in weniger aufwendigen Packungen, zum Beispiel in Papier- oder Kunststofftüten, anbieten, ohne dabei Schaden zu nehmen. Die Erfahrung hat aber gezeigt, dass viele Endverbraucher derart verpackte Produkte selbst bei interessanten Preisen ablehnen, sobald der äusserliche Aspekt des Produktes leicht beeinträchtigt ist, auch wenn die Gebrauchsfähigkeit des Produktes uneingeschränkt bleibt. Die Möglichkeiten, Abfall zu vermeiden, sind daher bei Einzelpackungen begrenzt.

Bei der Erstellung von Sammelpackungen dienen häufig Kartonschachteln verschiedenster Art als Sammelelemente. Im Gegensatz zu den Grosspackungen, für welche meist Mehrweggebinde zum Einsatz kommen, handelt es sich bei den Kartonschachteln für die Sammelpackungen im allgemeinen um Einweggebinde. Da die Sammelpackungen üblicherweise nicht für Endverbraucher bestimmt oder allenfalls in Grossmärkten nur sehr preisbewussten und nicht allzu kritischen Endverbrauchern angeboten werden, ist die Möglichkeit der Abfallvermeidung durch Verwendung von weniger aufwendigem Packungsmaterial hier grösser als bei den Einzelpackungen. Sammelpackungen, bei denen als Sammelelement eine Kartonschachtel verwendet wird, weisen zusätzlich zum verhältnismässig grossen Materialverschleiss bzw. Abfall einen weiteren Nachteil auf. Die Entnahme von Einzelpackstücken ist nämlich verhältnismässig umständlich, da dazu stets der Schachteldeckel angehoben werden muss.

Um in einfacher Weise Zugriff zu den Einzelpackstücken zu haben, werden daher diese häufig nicht in den Gebinden gelagert sondern beispielsweise in Regalen oder Schubladen aufbewahrt, was wiederum gewisse Nachteile verursacht, so z.B. die Verstaubung der Einzelpackstücke in Regalen und die Schwierigkeit, in halbleeren Schubladen bei deren Verschiebung ein Durcheinander zu vermeiden.

Bei anderen Sammelpackungen werden flexible, folienartige Sammelelemente wie beispielsweise Zuschnitte von Papier oder Kunststoffolien verwendet. Sammelelemente aus Papier werden im allgemeinen durch Kleben, solche aus Kunststoff durch Schrumpfung in der erwünschten Stellung gehalten. Diese flexiblen Sammelelemente weisen gegenüber Kartonschachteln beträchtliche Vorteile auf; so sind der notwendige Materialaufwand, das Transportgewicht, in gewissem Masse das Transportvolumen und schliesslich die zu entsorgende Abfallmenge geringer als bei den Kartonschachteln. Nachteilig sind aber das oft umständliche Oeffnen der Sammelpackungen und die Tatsache, dass geöffnete Sammelpackungen nicht wieder ordentlich verschlossen werden können. Es handelt sich dabei also nicht nur um Einwegpackungen sondern, im Gegensatz zu den Kartonschachteln, gewissermassen um 'Einmalpackungen'. Aus dem DE-GM-295 12 594 U1 ist eine Art Sammelpackung für gestapelte Gegenstände wie beispielsweise CDs bekannt, die in einer Reihe aufeinander gestapelt sind; Stapel aus mehreren Reihen sind nicht vorgesehen; ein Klebband, das in verschiedenen Konfigurationen an diesem CD-Stapel angebracht sein kann, hält die Gegenstände zusammen; diese CD-Sammelpackung ist nicht so konzipiert, dass sie bei der Entnahme einzelner Gegenstände intakt bleibt; ihr Zweck besteht lediglich darin, Gegenstände im Multi-Pack anzubieten, wobei der Einzelpreis, der in einer Währung oder mittels Strichcode auf jedem der Gegenstände angegeben ist, überdeckt bzw. unlesbar gemacht werden muss, damit sich bei der Verrechnung keine Irrtümer ergeben; dies ist natürlich besonders wichtig, wenn der Preis an einer Kasse mittels einer Scanner-Einrichtung abgelesen wird.

Altbekannte, aber zu industrieller Herstellung von Sammelpackungen nicht gebrauchte Sammelelemente sind Gummiringe. Diese halten bei geringem Materialaufwand und kleinem Platzbedarf mehrere Einzelpackstücke zusammen. Die Einzelpackstücke können problemlos, im allgemeinen sogar mit einer Hand, entnommen werden. Infolge ihrer Flexibilität sind die Gummiringe für verschiedene Formen von Stapeln verwendbar, und dank ihrer Elastizität sind sie mindestens in beschränktem Rahmen in der Lage, sich an kleiner werdende Stapel anzupassen, wenn diesen nach und nach Einzelpackstücke entnommen werden; reicht ihre Elastizität dazu nicht mehr aus, so können sie weiterhin verwendet werden, indem sie mehrfach um die restlichen noch gestapelten Einzelpackstücke geschlungen werden. Nachteilig ist jedoch, abgesehen von einer gewissen Unebenheit, welche durch die Gummibänder an den Aussenflächen der Stapel entstehen, dass die Einzelpackstücke in keiner Weise gegen Staub geschützt sind, dass keine Beschriftung anbringbar ist und dass die Gummiringe sich nur zur Erzeugung von Sammelpackungen eignen, in denen die Einzelpackgüter in einer Reihe angeordnet sind, wogegen sie sich nicht eignen, wenn die Einzelpackstücke in zwei oder mehreren nebeneinander angeordneten Reihen gestapelt sind.

Es muss festgestellt werden, dass keine der bisher bekannten Sammelpackungen in jeder Beziehung befriedigend ausfällt.

Die erste Aufgabe der Erfindung ist es somit, eine Sammelpackung der eingangs genannten Art zu schaffen, welche mit geringem Materialaufwand herstellbar ist, die ein problemloses Entnehmen von Einzelpackstücken erlaubt, wobei die im Stapel verbleibenden Einzelpackstücke weiterhin zusammengehalten werden, und die sich auch für Stapel von Einzelpackstücken eignet, in welchen diese in mehreren nebeneinanderliegenden Reihen angeordnet sind.

Die zweite Aufgabe der Erfindung besteht darin, eine Folie als Sammelelement einer solchen Sammelpackung vorzuschlagen.

Die dritte Aufgabe der Erfindung betrifft die Verwendung einer solchen Folie zum Erstellen von Sammelpackungen.

Die erste Aufgabe wird, ausgehend von einer durch ein Sammelelement in Form eines Gummiringes zusammengehaltenen Sammelpackung, durch die Merkmale des kennzeichnenden Teils des Patentanspruchs 1 gelöst. Die vom Patentanspruch 1 abhängigen Unteransprüche definieren vorteilhafte Weiterbildungen und bevorzugte Ausführungsbeispiele der erfindungsgemässen Sammelpackung.

Zur Lösung der zweiten Aufgabe wird die durch die Merkmale des kennzeichnenden Teils des Patentanspruchs 17 gekennzeichnete Folie vorgeschlagen. Vorteilhafte Weiterentwicklungen der erfindungsgemässen Folie werden durch die vom Patentanspruch 17 abhängigen Unteransprüche definiert.

Die Lösung der dritten Aufgabe ist durch die Merkmale des kennzeichnenden Teils des Patentanspruchs 22 gegeben. Eine besonders vorteilhafte Verwendung ist durch den abhängigen Patentanspruch 23 definiert.

Die erfindungsgemässe Sammelpackung besteht somit aus Einzelpackstücken, die in einem Stapel angeordnet sind, und aus einem folienartigen Sammelelement, welches auf einer Folienseite eine rutschhemmende Schicht eines selbsthaftenden Klebers besitzt, wobei die Folie und diese Schicht so beschaffen sind, dass die Folie vom Stapel gelöst werden kann, ohne diesen zu beschädigen. Die mit der Schicht versehene Folienseite berührt mindestens eine Fläche jedes Einzelpackstückes, das am Aeusseren des Stapels angeordnet ist bzw. einen Teil der Stapelaussenfläche bildet.

Im Gegensatz zu einem Sammelelement in Form eines Gummiringes können die Einzelpackstücke nicht nur in einer sondern auch in mehreren Reihen im Stapel angeordnet sein. Aus der erfindungsgemässen Sammelpackung können die Einzelpackstücke problemlos nach und nach entnommen werden, was im allgemeinen bei genügend kleinen Einzelpackstücken sogar einhändig geschehen kann. Die restlichen Einzelpackstücke des Stapels bleiben in gegenseitig fixierter Lage in der Sammelpackung, so dass diese auch im angebrauchten Zustand stets einen ordentlichen Aspekt bietet, was nicht der Fall ist, wenn als Sammelelement ein nicht selbstklebender Zuschnitt aus Papier oder Kunststoffolie verwendet wird. Auch ist jederzeit in einfacher Weise feststellbar, wieviele Einzelpackstücke noch übrig sind, während bei Sammelpackungen mit Sammelelementen in Form von Kartonschachteln dies wesentlich umständlicher ist. Trotz all dieser funktionellen Vorteile sind die Herstellung der Sammelpackung und der materialmässige Aufwand dafür gering. Daraus ergibt sich neben einer Reduktion des Transportgewichtes und einer allerdings unbedeutenden Reduktion des Volumens eine verhältnismässig gering zu entsorgende Abfallmenge.

Mit der nach und nach erfolgenden Entnahme der Einzelpackstücke aus der Sammelpackung werden auch immer grössere Bereiche des Sammelelementes überflüssig. Diese Bereiche werden vorteilhaft wieder an die noch verbliebenen Einzelpackstücke geklebt, so dass der Rest der Sammelpackung stets einen geordneten Aspekt bietet. Zu diesem Zweck müssen die Folie und die Schicht so ausgebildet sein, dass sie wiederholt am Stapel festgeklebt, verklebt und vom Stapel zerstörungsfrei lösbar sind.

Sowohl im Hinblick auf die Herstellung wie auch im Hinblick auf die Entsorgung der Sammelpackung empfiehlt sich zur Herstellung der Schicht die Beschichtung der Folie unter Verwendung eines umweltfreundlichen, beispielsweise wasserlöslichen Klebers.

Die erfindungsgemässe Sammelpackung ist besonders geeignet für mindestens annährend quaderförmige, selbsttragende Einzelpackstücke wie Kartonschachteln, aber auch andere Einzelpackstücke, zum Beispiel zylindrische starre wie Dosen oder flexible wie textile Gebilde, können mittels eines solchen selbstklebenden Sammelelementes auf diese Weise zu Sammelpackungen vereinigt werden.

Vorzugsweise sind die Einzelpackstücke so im Stapel angeordnet, dass jedes Einzelpackstück mit dem Sammelelement in Berührung steht, da dann auch die Einzelpackstücke angebrochener Sammelpackungen zusammengehalten werden.

In einer einfachen Ausführung ist die Sammelpackung so konfiguriert, dass das Sammelelement eine ebene Fläche bildet, auf welcher die Einzelpackstücke in einer Schicht angeordnet sind. Der Vorteil dieser einfachen Ausführung der erfindungsgemässen Sammelpackung besteht darin, dass sich die Einzelpackstücke in besonders einfacher Weise entnehmen lassen, ohne dass überflüssiges, störendes Packmaterial zurückbleibt; ohne zusätzliche Kennzeichnung ist auch stets klar ersichtlich, um welche Art von Einzelpackgütern es sich handelt, selbst dann, wenn das Sammelelement nicht transparent ist. Allerdings bietet ein solches Sammelelement nur einen Schutz für eine einzige Aussenfläche des Stapels, der Stapel kann nicht in beliebiger Stellung gelagert werden und er kann sich bei seiner Handhabung fächerartig verformen. Eine solche Verformung kann verhindert werden, wenn der dem Sammelelement gegenüberliegende Endbereich des Stapels von einem Band zusammengehalten wird, das sich parallel zum Sammelelement um den Stapel erstreckt, oder wenn ein zweiter Abschnitt aus gleichem oder ähnlichem Material wie das gewissermassen einen Boden für den Stapel bildende Sammelelement als eine Art Deckel auf dem Stapel angebracht wird, wobei nicht der ganze Stapel, wohl aber jedes der Einzelpackstücke, mit diesem deckenden Element in Berührung sein muss.

Einen besseren Schutz der Einzelpackstücke und eine formstabilere Sammelpackung erhält man, wenn das Sammelelement den Stapel an mehreren, bei quaderförmigen Sammelpackungen an mindestens drei aufeinanderfolgenden Seiten berührt, also - aus der Sicht eines Betrachters - bespielsweise vorn, unten und hinten, so dass der Stapel lediglich drei ungeschützte Seitenflächen, oben, rechts und links, aufweist. Auch hier lässt sich bei Verwendung von opaken Sammelelementen noch ohne weitere Kennzeichnung oder Beschriftung erkennen, welcher Art die Einzelpackstücke sind.

Noch besser sind der Schutz der Einzelpackstücke und die Stabilität der Sammelpackung, wenn das Sammelelement den Stapel über mindestens annähernd 360 Grad umschliesst bzw. an vier aufeinanderfolgenden Seiten berührt, also z.B. - aus der Sicht des Betrachters - oben, vorn, unten und hinten, während nur die beiden Seitenfläche rechts und links ungeschützt sind. Dabei ist es nicht notwendig, dass sich die freien Querkanten des Sammelelementes überlappen. Die beiden ungeschützten Seitenflächen erlauben es noch stets zu erkennen, aus welchen Einzelpackstücken der Stapel besteht, auch wenn das Sammelelement nicht durchsichtig ist.

Der Stapel kann mindestens bis zur Entnahme des ersten Einzelpackstückes praktisch vollständig geschützt werden, wenn auch die beiden freien Seitenflächen mit flächigen Zusatzelementen versehen werden, die vorzugsweise gleich ausgebildet sind wie das Sammelelement.

Bei der Erzeugung völlig geschützter Sammelpackungen, wie sie eben beschrieben worden sind, in welchen die Einzelpackstücke zwar nicht bezüglich ihrer Stabilität, wohl aber bezüglich ihrer Oberflächenreinhaltung vollständig geschützt sind, wählt man Sammelelemente, deren Breite gleich der Breite des Stapels ist.

In gewissen Fällen wird vom Sammelelement kein Schutz der Einzelpackstücke sondern lediglich deren Zusammenhalt erwartet. In solchen Fällen kann die Breite des Sammelelementes geringer sein als die Breite des Stapels. Dies bedeutet für Stapel mit nur einer Reihe von Packungen, dass das Sammelelement zu einem Streifen verkleinert oder auch durch zwei Teilstreifen gebildet werden kann.

Zur Erzeugung von Sammelpackungen aus Stapeln mit zwei Reihen von Einzelpackstücken muss mindestens der Bereich, in welchem die beiden Reihen aneinandergrenzen, vom Sammelelement überdeckt sein. Für Sammelpackungen aus Stapeln mit drei Reihen von Einzelpackstücken muss das Sammelelement breiter sein als eine Reihe, so dass die Einzelpackstücke der mittleren Reihe vollständig und die Einzelpackstücke der seitlichen Reihen mindestens teilweise vom Sammelelement berührt werden.

Sammelpackungen, in denen die Einzelpackstücke in mehr als einer Reihe angeordnet sind, können so ausgebildet werden, dass das Sammelelement im Bereich, in welchen sich die Reihen berühren, ein längliches Trennglied, beispielsweise einen Aufreissfaden, aufweist, welches bei seiner Entfernung die Sammelpackung in Teilpackungen trennt. Damit erreicht man, dass die Einzelpackstücke der Sammelpackung Reihe für Reihe entnommen werden, wobei die Einzelpackstücke der nichtangebrochenen Teilpackungen vorderhand noch zusammengehalten werden und, bei entsprechender Gestaltung des Sammelelementes, auch geschützt bleiben. Solche Teilpackungen können natürlich auch getrennt gelagert und verbraucht werden. Anstelle des Trenngliedes kann auch eine Perforation des Sammelelmentes vorgesehen sein.

Als Sammelelement kann ein Zuschnitt aus geeignetem Papier oder Textilmaterial verwendet werden.

Besonders vorteilhafte Sammelelemente bestehen aus einem Zuschnitt einer Kunststoffolie. Wie schon erwähnt, eignen sich insbesondere transparente Kunststoffolien, da sich bei ihrer Verwendung eine Kennzeichnung des Inhalts der Sammelpackung erübrigt.

Im Hinblick auf die Entsorgung des Sammelelementes ist es nützlich, für die Kunststoffolie einen biologisch abbaubaren Kunststoff zu wählen.

Um Schnittkanten des Sammelelementes vor Beschädigungen zu schützen, können sie verstärkt werden, indem sie mit einem Verstärkungsstreifen belegt werden. Die einfachste Art, eine Verstärkung zu bilden, besteht darin, den Kantenbereich des Sammelelementes so umzubiegen, dass die mit Kleber beschichteten Folienseiten aufeinander zu liegen kommen. Dieser Vorgang kann gleichzeitig mit dem Zuschneiden des Sammelelementes bzw. dem Abtrennen des Sammelelementes von einer Endlosbahn erfolgen. Vor allem die beim Oeffnen der Sammelpackung angefasste freie Kante, die als Querkante bezeichnet wird, also nicht die seitliche sondern die Vorder- bzw. Oberkante, wird verhältnismässig stark beansprucht. Bei Sammelpackungen mit einem Kleber, der ein wiederholtes Kleben und Lösen des Sammelelementes erlaubt, ist die eben erläuterte Beanspruchung der Kante bzw. die Gefahr des Einreissens des Sammelelementes entsprechend grösser, so dass die Verstärkung der Kante besonders empfehlenswert ist.

Die erfindungsgemässe Folie, welche sich als Sammelelement zur Erstellung einer solchen Sammelpackung besonders eignet, ist eine Kunststoffolie, welche einseitig eine rutschhemmende bzw. klebende Schicht aufweist, die zerstörungsfrei lösbar ist.

Bevorzugt wird die Folie aus einem biologisch abbaubaren und/oder rezyklierten, insbesondere lichtundurchlässigen Kunststoff hergestellt.

Die klebende Schicht kann durch eine aufgebrachte Beschichtung mit einem vorzugsweise umweltfreundlichen, beispielsweise wasserlöslichen Kleber erzeugt werden.

Es ist aber auch möglich, die klebende Schicht zusammen mit der Folie durch Koextrusion zu erzeugen.

Eine weitere Möglichkeit besteht darin, die klebende Schicht mittels Behandlung der Folie, beispielsweise mittels Coronabehandlung, herzustellen.

Bei der erfindungsgemässen Verwendung der Folie zur Erstellung einer Sammelpackung aus Einzelpackstücken, die in einem Stapel angeordnet sind, trennt man einen Abschnitt des Folienmaterials ab und legt ihn so an die Aussenfläche des Stapels, dass mindestens jedes an dieser Aussenfläche angeordnete Einzelpackstück mit der klebenden Seite der Folie in Berührung steht.

Zur maschinellen Verwendung eignet sich vor allem endloses, von einer Vorratsrolle abwickelbares Folienmaterial.

Im folgenden wird die Erfindung anhand von Beispielen und mit Bezug auf die Zeichnung ausführlich beschrieben. Es zeigt:
- **Fig. 1**: eine erste Sammelpackung mit einem ebenen Sammelelement, in einem Schaubild;
- **Fig. 2**: eine zweite Sammelpackung mit einem den Stapel der Einzelpackungen umfassenden Sammelelement, in einer Ansicht von der Seite;
- **Fig. 3**: die in Fig. 2 dargestellte Sammelpackung nach Entnahme einiger Einzelpackstücke, in gleicher Darstellung wie Fig. 2;
- **Fig. 4**: eine dritte Sammelpackung mit Einzelpackstücken, die in einer Reihe eines Stapels angeordnet sind, in einem Schaubild;
- **Fig. 5**: eine vierte Sammelpackung mit Einzelpackstücken, die in drei Reihen eines Stapels angeordnet sind, in einem Schaubild; und
- **Fig. 6**: einen Abschnitt einer Kunststoffolie zur Verwendung als Sammelelement.

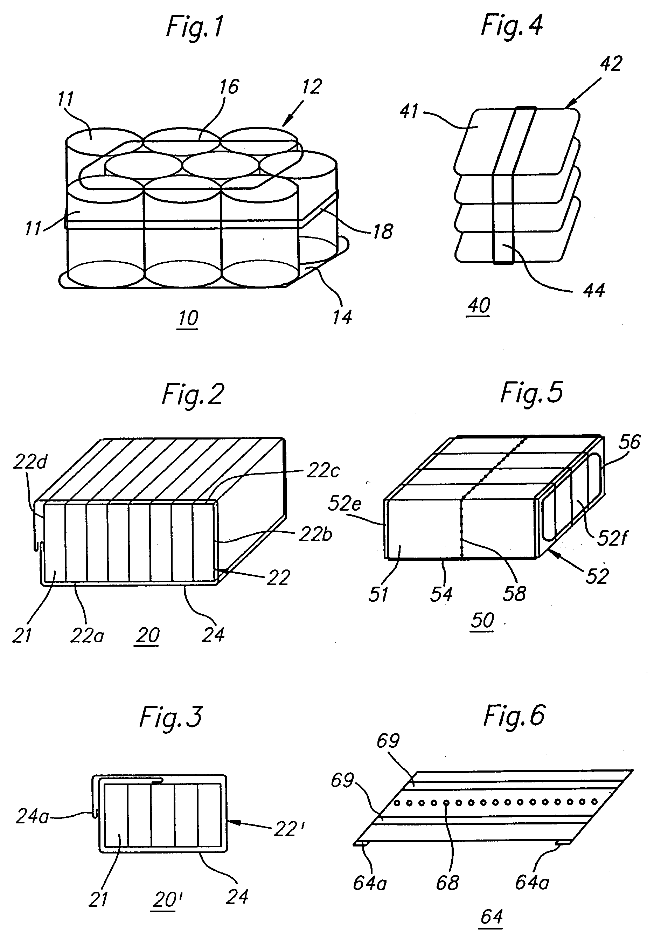

Die in **Fig. 1** dargestellte Sammelpackung **10** besteht aus Einzelpackstücken **11**, die in einem Stapel **12** angeordnet sind, und aus einem diese zusammenhaltenden Sammelelement **14**. Die Bezeichnung 'Stapel' ist zwar im vorliegenden Fall, wo die Einzelpackstücke zylindrisch sind, nicht ganz zutreffend, soll aber im Rahmen dieser Beschreibung auch für Gruppen von Einzelpackstücken verwendet werden, wie sie in **Fig. 1** dargestellt sind. Das Sammelelement ist folienartig und wird in ebener Konfiguration verwendet. Es berührt jedes der Einzelpackstücke **11**, was bei einem Sammelelement **14** in ebener Konfiguration natürlich bedeutete, dass der Stapel **12** nur eine Etage enthalten kann. Das Sammelelement **14** besteht aus einem Zuschnitt aus Papier oder Kunststoffolie und weist eine Beschichtung aus einem Kleber auf, auf welcher die Einzelpackstücke **11** haften. Das Sammelelement **14**, d.h. sowohl das Papier bzw. die Kunststoffolie wie auch die Beschichtung sind so beschaffen, dass die Einzelpackstücke **11** aus der Sammelpackung **10** entnommen werden können, ohne dass das Sammelelement **14** oder die Einzelpackstücke **11** dabei beschädigt werden; die letzteren bleiben nicht nur intakt, wenn sie aus Metall, Glas oder rigidem Kunststoff oder biologischen Produkten bestehen, sondern auch dann, wenn sie aus Papier oder Kunststoff bestehen oder eine Aussenschicht aus Papier, Karton oder Kunststoff besitzen. Damit sich die Sammelpackung **10** bei ihrer Handhabung nicht fächerartig verformt, sind gemäss **Fig. 1** zwei Massnahmen getroffen, von denen aber auch jede für sich ausreichen würde: zum einen werden die Einzelpackstücke **11** am oberen Endbereich des Stapels **12** von einem Band **18** umfasst und zusammengehalten, und zum anderen wird über den Einzelpackstücken ein deckendes folienartiges Element **16** angebracht; das Band **18** und insbesondere das folienartige Element **16** bestehen aus demselben Material wie das Sammelelement **14**.

**Fig. 2** zeigt eine Sammelpackung **20**, in welcher quaderförmige, selbsttragende Einzelpackstücke **21**, beispielweise Kartonschächtelchen, einen Stapel **22** bilden. An vier aufeinanderfolgenden Aussenflächen **22a, 22b, 22c, 22d** wird der Stapel **22** von einem Sammelelement **24** berührt, so dass er also praktisch vom Sammelelement **24** umfasst wird. Auch in diesem Falle berührt das Sammelelement **24** jedes der Einzelpackstücke **21**, was auch dann der Fall wäre, wenn der Stapel **22** nicht wie abgebildet nur eine Etage sondern zwei Etagen von Einzelpackstücken enthalten würde. Ein Sammelelement, das einen Stapel längs mindestens annähernd als 360 Grad berührt bzw. annähernd vollständig umfasst, wobei sich seine durch Querkanten gebildeten Endbereiche überlappen oder beabstandet sind, kann sogar für Stapel verwendet werden, die - anders als der in **Fig. 3** dargestellte Stapel **22** - mehr als zwei Etagen enthalten; in einem solchen Fall muss allerdings die Entnahme von Einzelpackstücken sehr sorgfältig geschehen, damit der Stapel dabei nicht auseinanderfällt, da nur die am Aeusseren des Stapels angeordneten Einzelpackstücke das Sammelelement berühren.

Während in **Fig. 2** die vollständige Sammelpackung **20** dargestellt ist, zeigt **Fig. 3** dieselbe Sammelpackung **20'**, aus welcher jedoch ein Teil der Einzelpackstücke **21** entnommen wurde. Das hier verwendete Sammelelement **24** kann mehrfach gebraucht werden und wurde nach der Entnahme einiger der Einzelpackstücke **21** um den Rest des Stapels **22'** gelegt, so dass die verbleibenden Einzelpackstücke **21** zusammengehalten sind und die restliche Sammelpackung **20'** einen ordentlichen Aspekt bietet. Durch das mehrfache Lösen des Sammelelementes **24** wird dieses insbesondere an seiner Querkante **24a** stark beansprucht. Um die Gefahr des Einreissens an dieser Stelle zu vermindern, wird diese Querkante durch einen Verstärkungsstreifen verstärkt, welcher im vorliegenden Fall durch eine Umbiegung des Endbereiches des Sammelelementes **24** gebildet ist.

Bei den meisten Sammelpackungen, bei welchen eine teilweise oder mindestens annähernd vollständige Umfassung des Stapels an mehreren aufeinanderfolgenden Seiten beabsichtigt ist, lässt sich das Sammelelement theoretisch in drei, in der Praxis mindestens in zwei verschiedenen Richtungen um den Stapel wickeln, und es ist offensichtlich, dass man im allgemeinen diejenige Richtung bevorzugt, welche den geringsten Materialaufwand erfordert. Allerdings können Sammelpackungen auch erstellt werden, indem das Sammelelement in herkömmlicher Weise als Packmaterial verwendet wird, in gleicher Konfiguration, weil man ein Postpaket mit Papier umhüllt. Auf diese Weise können die Einzelpackstücke bei geeigneter Wahl des Folienmaterials praktisch hermetisch verpackt und jedenfalls allseitig und auch an den Kanten vollständig geschützt werden.

Eine weitere Sammelpackung **40**, in welcher weiche, nachgiebige Einzelpackstücke **41** in einer Reihe in einem Stapel **42** angeordnet sind, ist in **Fig. 4** dargestellt. Während im Stapel **20** gemäss **Fig. 2** die Einzelpackstücke **21** nebeneinander angeordnet waren, liegen die Einzelpackstücke **41** im Stapel **40** übereinander. Ein schmales Sammelelement **44**, das nur dazu dient, die Einzelpackstücke **41** zusammenzuhalten, nicht aber sie wirklich zu schützen, umfasst den Stapel **42**.

**Fig. 5** zeigt eine weitere Sammelpackung **50**, die in einem Stapel **52** in zwei benachbarten Reihen angeordnete schachtelartige Einzelpackstücke **51** enthält. Ein Sammelelement **54** erstreckt sich über die gesamte Breite des Stapels **52** und umfasst den Stapel **52** vollständig. Zum vollständigen Schutz des Stapels **52** vor der Entnahme von Einzelpackstücken **51** sind die nicht vom Sammelelement **54** bedeckten seitlichen Aussenflächen **52e, 52f** des Stapels **52** mit je einem Zusatzelement **56** versehen, das aus demselben Material besteht wie das Sammelelement **54**. Das Sammelelement **54** weist an derjenigen Stelle, die über der Berührungslinie der beiden Reihen **50a, 50b** des Stapels **52** liegt, eine Trennstelle, im vorliegenden Fall durch eine Perforation **58** gebildet, auf. Anstelle der Perforation kann die Trennstelle auch ein Trennglied enthalten, beispielsweise in Form eines unterhalb oder innerhalb des Sammelelementes angeordneten Aufreissfadens. Die Trennstelle kann auch in der Art eines 'Zip-Verschlusses' gestaltet sein. Das Vorhandensein der Trennstelle ermöglicht es, die Sammelpackung **50** in zwei Teilpackungen **50a, 50b** zu teilen.

In **Fig. 6** ist schliesslich ein Zuschnitt eines folienartigen Sammelelementes **64** dargestellt, wie es zur Herstellung einer Sammelpackung nach der Erfindung verwendet wird. Das Sammelelement **64** weist umgebogene Querkanten **64a** sowie eine Perforation **68** auf; die Bedeutung dieser Konfigurationen wurde bereits weiter oben mit Bezug auf **Fig. 2** bzw. **Fig. 5** erläutert. Die Beschichtung mit dem Kleber kann vor oder nach dem Zuschnitt erfolgen. Das Grundmaterial für das Sammelelement **64** ist meist ein Endlosmaterial, kann aber auch aus Bogenmaterial bestehen.

Bei der Verwendung von Kunststoffolie als Sammelelement gemäss der Erfindung wird dieses, anders als bei der Herstellung von Schrumpfpackungen, nicht geschrumpft und somit bedeutend weniger beansprucht. Man kann daher eine Kunststoffolie wählen, die sehr viel dünner ist als die üblichen Schrumpffolien, was zu einer weiteren Einsparung von Material und zu weniger Abfall führt. Ein weiterer Vorteil bei der Verwendung von sehr dünnem Folienmaterial ist darin zu sehen, dass Falten, die sich beim ersten oder wiederholten Anlegen des Sammelelementes an den Stapel ergeben, was infolge der klebenden Schicht gelegentlich vorkommt, nur in unerheblichem Masse als störend empfunden werden.

Abschliessend sei noch darauf ausdrücklich hingewiesen, dass die dargestellten Sammelpackungen lediglich als Beispiele zu betrachten sind, und dass im Rahmen der Erfindung zahlreiche weitere Typen von Sammelpackungen erstellt werden können.

## Patentansprüche

1. Sammelpackung **(10, 20, 40, 50)** aus mehreren, in einem Stapel **(12, 22, 42, 52)** angeordneten Einzelpackstücken **(11, 21, 41, 51)** und aus einem zerstörungsfrei entfernbaren und nach Entnahme eines Einzelpackstückes **(11, 21, 41, 51)** aus dem Stapel **(11, 21, 41, 51)** wieder anbringbaren Sammelelement **(14, 24, 44, 54),** welches in Berührung steht mit mindestens einer Fläche jedes am Aeusseren des Stapels **(12, 22, 42, 52)** angeordneten Einzelpackstückes **(11, 21, 41, 51),**
**dadurch gekennzeichnet,**
dass das Sammelelement **(14, 24, 44, 54)** folienartig ausgebildet und auf einer Folienfläche, mit welcher die genannten Flächen der Einzelpackstücke **(11, 21, 41, 51)** in Berührung sind, eine klebende Schicht aufweist.

2. Sammelpackung **(10, 20, 40, 50)** nach Patentanspruch **1,**
**dadurch gekennzeichnet,**
dass die klebende Schicht wiederholt kleb- und lösbar ist.

3. Sammelpackung **(10, 20, 40, 50)** nach Patentanspruch **1,**
**dadurch gekennzeichnet,**
dass die klebende Schicht durch eine Beschichtung mit einem Kleber gebildet ist, der umweltfreundlich und vorzugsweise wasserlöslich ist.

4. Sammelpackung **(20, 50)** nach Patentanspruch **1,**
**dadurch gekennzeichnet,**
dass die Einzelpackstücke **(21, 51)** selbsttragend quaderförmig sind.

5. Sammelpackung **(10, 20, 40, 50)** nach Patentanspruch **1,**
**dadurch gekennzeichnet,**
dass das Sammelelement **(14, 24, 44, 54)** jedes Einzelpackstück **(11, 21, 41, 51)** berührt.

6. Sammelpackung **(10)** nach Patentanspruch **1,**
**dadurch gekennzeichnet,**
dass das Sammelelement **(14)** eine ebene Fläche bildet.

7. Sammelpackung **(20, 40, 50)**nach Patentanspruch **1,**
**dadurch gekennzeichne**t**,**
dass das Sammelelement **(24, 44, 54)** die Einzelpackstücke **(24, 44, 54)** an mehreren aufeinanderfolgenden Aussenflächen des Stapels **(22, 42, 52)** berührt.

8. Sammelpackung **(20, 40, 50)** nach Patentanspruch **1,**
**dadurch gekennzeichnet,**
dass das Sammelelement **(24, 44, 54)** den Stapel **(22, 42, 52)** mindestens annähernd längs 360 Grad umfasst.

9. Sammelpackung **(10, 50)** nach Patentanspruch **8,**
**dadurch gekennzeichnet,**
dass die vom Sammelelement **(14, 54)** nicht berührten Aussenflächen des Stapels mit weiteren Elementen **(16, 56)** versehen sind, welche im wesentlichen gleich ausgebildet sind wie das Sammelelement **(14, 54).**

10. Sammelpackung **(50)** nach Patentanspruch **1,**
**dadurch gekennzeichnet,**
dass die Breite des Sammelelementes **(54)** gleich der Breite des Stapels **(52)** ist.

11. Sammelpackung **(40)** nach Patentanspruch 1,
**dadurch gekennzeichnet,**
dass die Breite des Sammelelementes **(44)** kleiner ist als die Breite des Stapels **(44).**

12. Sammelpackung **(50)** nach Patentanspruch **1,**
**dadurch gekennzeichnet,**
dass der Stapel **(52)** mindestens zwei Reihen von Einzelpackstücken **(51)** enthält.

13. Sammelpackung **(50)** nach Patentanspruch **12,**
**dadurch gekennzeichnet,**
dass das Sammelelement **(54)** einen Trennstreifen oder eine Vorperforation **(58)** aufweist, die über der Fuge von benachbarten Reihen des Stapels **(52)** verläuft und dazu bestimmt ist, bei seiner Entfernung das Sammelelement **(54)** zu zertrennen, um zwei Reihen des Stapels **(52)** in Teilstapel zu trennen.

14. Sammelpackung nach Patentanspruch **1,**
**dadurch gekennzeichnet,**
dass das Sammelelement durch einen Zuschnitt aus Fasermaterial wie Papier oder Textil gebildet ist.

15. Sammelpackung nach Patentanspruch **1,**
**dadurch gekennzeichnet,**
dass das Sammelelement durch einen Zuschitt einer vorzugsweise transparenten, vorzugsweise biologisch abbaubaren Kunststoffolie ist.

16. Sammelpackung **(20)** nach Patentanspruch 1**,**
**dadurch gekennzeichnet,**
dass mindestens eine der Querkanten **(24a)** des Sammelelementes **(24)** eine Verstärkung, insbesondere durch ein Umbiegen des Randbereiches in Richtung zur klebenden Schicht aufweist.

17. Folie als Sammelelement für eine Sammelpackung,
**dadurch gekennzeichnet,**
dass die Folie durch eine Kunststoffolie gebildet ist, welche einseitig eine klebende Schicht aufweist, die zerstörungsfrei lösbar ist.

18. Folie nach Patentanspruch **17,**
**dadurch gekennzeichnet,**
dass die Folie aus biologisch abbaubarem und/oder rezykliertem, insbesondere lichtundurchlässigem Kunststoff gebildet ist.

19. Folie nach Patentanspruch **17,**
**dadurch gekennzeichnet,**
dass die klebende Schicht durch eine aufgebrachte Beschichtung mit einem vorzugsweise wasserlöslichen Kleber gebildet ist.

20. Folie nach Patentanspruch **17,**
**dadurch gekennzeichnet,**
dass die klebende Schicht mit der Folie koextrudiert ist.

21. Folie nach Patentanspruch **17,**
**dadurch gekennzeichnet,**
dass die klebende Schicht durch eine Behandlung der Folie, insbesondere eine Coronabehandlung zwecks Erzeugung einer rutschhemmenden Fläche, erzeugt ist.

22. Verwendung einer Folie als Sammelelement für eine Sammelpackung aus einem Stapel bildenden Einzelpackstücken,
**dadurch gekennzeichnet,**
dass man diese in geeigneter Grösse aus Folienmaterial zuschneidet und so an der Aussenfläche eines Stapels anbringt, dass mindestens jedes der an der Aussenfläche liegenden Einzelpackstücke mit der Folie in Berührung steht.

23. Verwendung nach Patentanspruch **22,**
**dadurch gekennzeichnet**,
dass das Folienmaterial ein Endlosmaterial ist.
